# EUROPEAN PATENT APPLICATION

(11) **EP 1 712 324 A1**
(43) Date of publication of application: **18.10.2006**
(21) Application number: 06252001.0
(22) Date of filing: 10.04.2006
(51) Int. Cl.: B23K 33/00, B23K 26/28, B23K 15/04, F01D 5/02, F01D 5/06, B23K 101/00

(54) **Weld prep joint assembly with interference fit for electron beam or laser welding ; Method of welding such assembly**

(30) Priority: 13.04.2005 US 104404
(71) Applicant: GENERAL ELECTRIC COMPANY, Schenectady, NY 12345 (US)
(72) Inventor: Burnett, Mark Edward, Barton, New York 13734 (US); Yehle, Gary Edward, Clifton Park, New York 12065 (US); Spiegel, Lyle B., Niskayuna, New York 12309 (US); Babcock, William Edward, Broadalbin, New York 12025 (US)
(74) Representative: Bedford, Grant Richard

(57) **Abstract**

A weld prep joint (22) for welding a pair of axially aligned first and second machine rotor forgings (14,16) includes a first weld joint configuration in an end of the first rotor forging (14) including a first radial weld surface (26) and a first axial rabbet surface (28); a second weld joint configuration on an end of the second rotor forging (16) including a second radial weld surface (30) adapted to engage the first radial weld surface (26), a second axial rabbet surface (34) adapted to engage the first axial rabbet surface (28), and a third radial non-weld surface (33) extending radially inwardly of the second rabbet surface (34) and axially offset from the second radial weld surface (30). The present application further discloses a method of welding such pair of axially aligned first and second machine rotor forgings (14,16) through laser or electron beam.

## Description

This invention relates to electron beam or laser welding and, specifically, to a steam turbine rotor weld prep joint configured to facilitate a single pass full penetration fusion weld of axially-aligned rotor forgings using a focused high energy beam.

Certain turbine rotors are comprised of a one piece "monoblock" forging. More recently, to facilitate manufacture, shipment and assembly, discrete rotor components or forgings have been welded together to duplicate the original single forging. Welded rotors have not been completely satisfactory, however, due to difficulty in alignment and preparation of end faces for welding.

Aspects of the invention provide a unique weld prep joint for rotor forgings having two geometry aspects that are particularly beneficial. First, the weld prep joint is configured to provide a rabbet interference fit for consistent concentric assembly of axially-aligned rotor forging components prior to welding. Secondly, the radial surfaces to be welded are offset from the rabbet surfaces such that the rabbet surfaces act as a backing, thus preventing burn-through and material drop-through from forming on the rotor bore surfaces, thus eliminating internal rotor surface rework.

In the exemplary embodiment, the rotor components are machined to provide mating axial rabbet surfaces on each of the two components creating a concentric interference fit between the axially-aligned forging components, thereby eliminating rotor vibration. The arrangement also allows relative axial movement of the two components prior to the welding operation.

More specifically, one of the rotor forging components is provided with a first axial rabbet surface and a radial weld surface. The other rotor forging component is machined to include an underlying axial lip with a second axial rabbet surface mated to the axial rabbet surface of the first component, and a second radial weld surface adapted for engagement with the first radial weld surface of the first rotor forging. The laser or electron beam welding process produces a radially extending weld area along the first and second radial weld surfaces, and also extending radially into the lip portion of the second rotor forging component. By extending the weld area radially inwardly of the mated rabbet surfaces (i.e., into a low stress area), the potential for stress cracking at the rabbet surface joint is minimized.

Accordingly, in one aspect, the present invention relates to a weld prep joint for welding a pair of axially aligned first and second machine rotor forgings comprising a first weld joint configuration in an end of the first rotor forging including a first radial weld surface and a first axial rabbet surface; a second weld joint configuration on an end of the second rotor forging including a second radial weld surface adapted to engage the first radial weld surface, a second axial rabbet surface adapted to engage the first axial rabbet surface, and a third radial non-weld surface extending radially inwardly of the second rabbet surface and axially offset from the second radial weld surface.

In another aspect, the invention relates to a welded rotor assembly comprising a pair of axially aligned rotor forgings joined by a circumferentially extending weld area, the weld area defined by a pair of axially aligned weld prep joints including a first weld joint configuration in an end of the first rotor forging having a first radial weld surface and a first axial rabbet surface, and a second weld joint configuration on an end of the second rotor forging including a second radial weld surface engaged with the first radial weld surface; a second axial rabbet surface engaged with the first axial rabbet surface; and a third radial non-weld surface extending radially inwardly of the second rabbet surface and axially offset from the second radial weld surface.

In still another aspect, the invention relates to a method of welding a pair of axially-aligned rotor forgings comprising (a) preparing weld prep joints on opposed ends of the rotor forgings, one of the joints including a first radial weld surface and a first axial rabbet surface, the other of the joints including a second radial weld surface and a second axial rabbet surface; (b) joining the rotor forgings axially by a concentric interference fit between the first and second axial rabbet surfaces with the first and second radial weld surfaces engaged; and (c) utilizing a laser or electron beam welding machine, welding the rotor forgings together, creating a weld area at least along the first and second radial weld surfaces.

Embodiments of the invention will now be described in detail in connection with the drawings identified below, in which:
FIGURE 1 is a partial axial cross-section of a low pressure turbine rotor with three weld joints;
FIGURE 2 is an enlarged detail taken from Figure 1; and
FIGURE 3 is an enlarged detail taken from Figure 2.

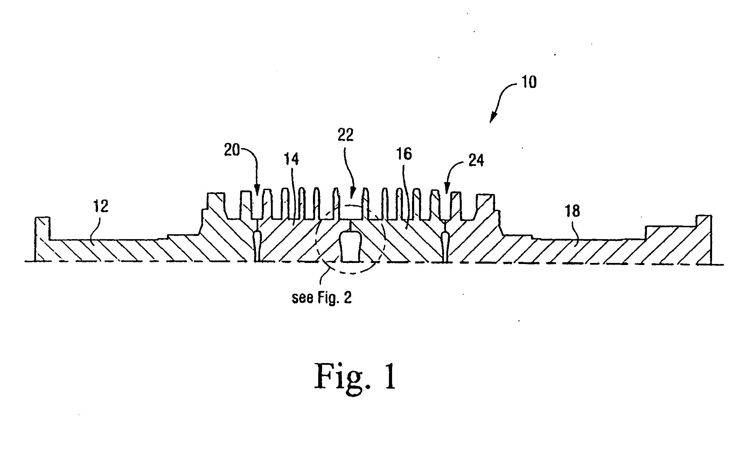

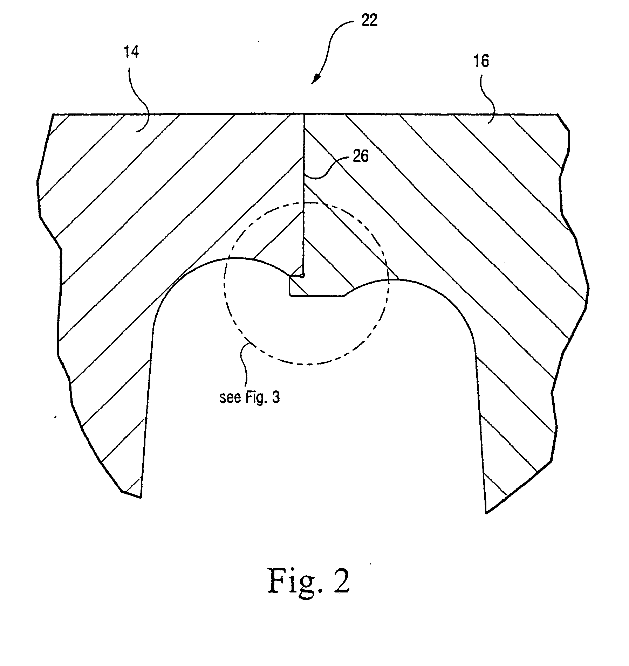

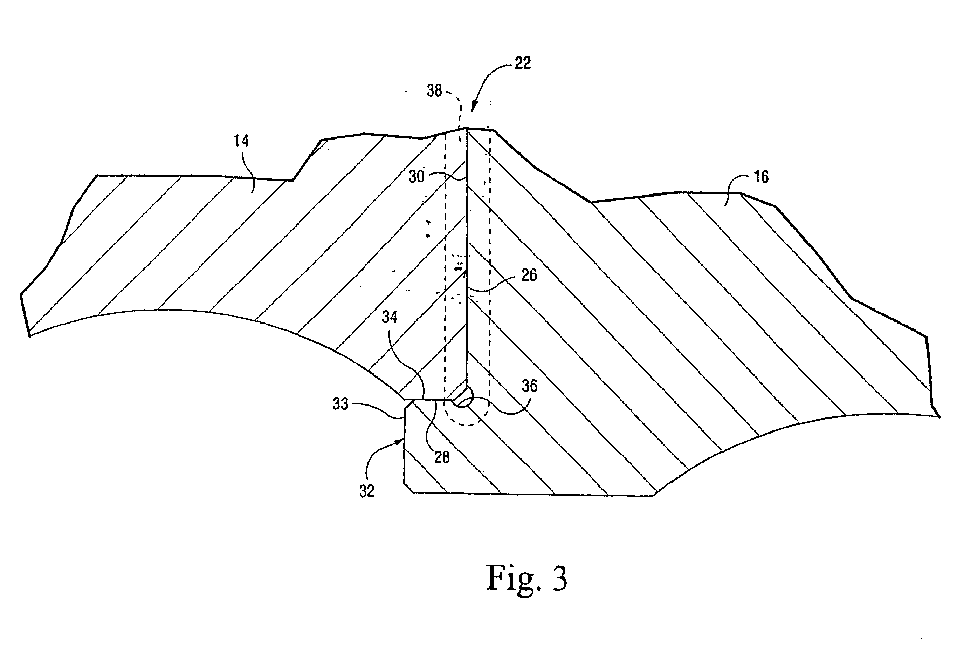

Referring to Figures 1 and 2, a rotor 10 for a turbine (e.g., a steam turbine) is constructed as a welded assembly of four rotor forging components (or simply, forgings) 12, 14, 16 and 18 joined at three weld joints 20, 22 and 24. The weld joints in the exemplary embodiment are substantially identical, and only one need be described in detail here. Weld joint 22 between components 14 and 16 is best seen in the enlarged detail of Figure 2. The rotor forging component 14 is machined in a weld prep process to include a first radial weld surface 26 perpendicular to the longitudinal axis of the rotor, and a first annular rabbet surface 28 (Figure 3) that extends axially, parallel to the longitudinal axis.

The rotor forging component 16 is machined to include a second radial weld surface 30 adapted to engage first weld surface 24, and an annular axial lip 32 radially inward of the first rabbet surface 28. The lip 32 is formed to include a second annular, axially extending rabbet surface 34 adapted to engage rabbet surface 28, and a forward face surface 33 of 2 or more inches in radial height forming an axial termination surface of the lip. Surfaces 30 and 33 are thus axially offset by a distance equally the length of the lip 32.

More specifically, the mating rabbet surfaces 28, 34 are machined so as to obtain a concentric interference fit between the axially-aligned forging components 14, 16. At the same time, the radial facing weld surface 26, 30 abut each other at a location where the lip 32 joins with the remainder of the forging component, i.e., the weld location at the interface of radial weld surfaces 24, 30 is axially offset from the mating rabbet surfaces 28, 34 so that there is no need for a full penetration weld that would otherwise require rework to clean up burn-through and/or drop-through material from the welding process. An annular groove 36 at the juncture of the rabbet surface 34 and radial weld surface 30 provides a receptor for molten metal during the welding process and is believed to assist in controlling the weld area termination point within the lip 32.

With the forging components located as shown in Figures 2 and 3, the laser or electron beam welding tool (not shown) is rotated about the rotor to weld the components along the radial interface. Figure 3 shows the weld area 38 of the components that are made molten during the process and that form the weld. In the exemplary embodiment, the weld penetrates axially about .200 inch on each side of the radial interface at surfaces 24, 30. At the same time, the weld extends radially along the interface of surfaces 26, 30 nine or more inches and radially inwardly through about ½ the height of the lip 32. It is important that the radial depth of the weld extend below the mated rabbet surfaces, and thus below a relatively higher stress point. In other words, cracks are far less likely to propagate if the weld terminates in an area of low stress, such as that in the interior of the lip 32, radially below the rabbet surfaces.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A weld prep joint (22) for welding a pair of axially aligned first and second machine rotor forgings (14, 16) comprising:
a first weld joint configuration in an end of said first rotor forging (14) including a first radial weld surface (26) and a first axial rabbet surface (28);
a second weld joint configuration on an end of said second rotor forging (16) including a second radial weld surface (30) adapted to engage said first radial weld surface (26), a second axial rabbet surface (34) adapted to engage said first axial rabbet surface (28), and a third radial non-weld surface (33) extending radially inwardly of said second rabbet surface (34) and axially offset from said second radial weld surface (30).

2. The weld prep joint of claim 1 wherein said first and second radial weld surfaces (26, 30) extend perpendicular to a longitudinal axis of said rotor forgings (14, 16).

3. The weld prep joint of claim 2 wherein said third radial non-weld surface (33) extends parallel to said first and second radial weld surfaces (26, 30).

4. The weld prep joint of any preceding claim wherein said third radial non-weld surface (33) has a radial length of two or more inches.

5. The weld prep joint of any preceding claim wherein said first and second radial weld surfaces (26, 30) have a radial length of nine or more inches.

6. The weld prep joint of claim 4 wherein said first and second radial weld surfaces (26, 30) have a radial length of nine or more inches.

7. The weld prep joint of any preceding claim and further comprising a circumferential groove (36) at an intersection of said second radial weld surface (30) and said second axial rabbet surface (34).

8. A method of welding a pair of axially-aligned rotor forgings (14, 16) comprising:
(a) preparing weld prep joints on opposed ends of said rotor forgings, one of said joints including a first radial weld surface (16) and a first axial rabbet surface (28), the other of said joints including a second radial weld surface (30) and a second axial rabbet surface (34);
(b) joining said rotor forgings axially by a concentric interference fit between said first and second axial rabbet surfaces with said first and second radial weld surfaces engaged; and
(c) utilizing a laser or electron beam welding machine, welding the rotor forgings together, creating a weld area at least along said first and second radial weld surfaces.

9. The method of claim 8 wherein said weld area extends radially inwardly of said first and second axial rabbet surfaces (28, 34).

10. The method of claim 8 or claim 9 wherein said first and second radial weld surfaces (26, 30) extend perpendicular to a longitudinal axis of said rotor forgings (14, 16).
